(19) Europäisches Patentamt
European Patent Office
Office européen des brevets

(11) **EP 4 696 574 A1**

(12) **EUROPEAN PATENT APPLICATION**

(43) Date of publication:
**18.02.2026 Bulletin 2026/08**

(21) Application number: **24194784.5**

(22) Date of filing: **15.08.2024**

(51) International Patent Classification (IPC):
**B60W 30/045** *(2012.01)* **B60W 30/18** *(2012.01)*
**B60W 40/103** *(2012.01)* **B62D 7/15** *(2006.01)*

(52) Cooperative Patent Classification (CPC):
**B60W 30/045; B60W 30/18145; B60W 30/18172;**
**B60W 40/101; B60W 40/103; B62D 7/159;**
B60W 2040/1315; B60W 2050/0033;
B60W 2520/10; B60W 2520/14; B60W 2520/20;
B60W 2520/26; B60W 2530/20; B60W 2552/40;
B60W 2710/207; (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **VOLVO TRUCK CORPORATION**
**405 08 Göteborg (SE)**

(72) Inventors:
• PERSSON, Jonas
  **412 58 GÖTEBORG (SE)**
• LAINE, Leo
  **414 84 GÖTEBORG (SE)**

(74) Representative: **Ström & Gulliksson AB**
**P.O. Box 4188**
**203 13 Malmö (SE)**

(54) **ROTATIONAL SPEED CONTROL FOR STEERED AXLES OF A VEHICLE**

(57) A computer system and computer-implemented method for determining a rotational speed limit for a steered axle of a vehicle having two steered axles are disclosed. The computer system comprises processing circuitry configured to: acquire a combined slip limit for the steered axle based on a slip diamond; determine a longitudinal slip limit for the steered axle based on the combined slip limit and a current lateral slip of the steered axle; and determine a rotational speed limit for the steered axle based on the determined longitudinal slip limit, a radius of a wheel of the steered axle, and a current longitudinal velocity of the vehicle.

FIG. 1

(52) Cooperative Patent Classification (CPC): (Cont.)
B60W 2720/26

**Description**

**TECHNICAL FIELD**

The disclosure relates generally to vehicle control. In particular aspects, the disclosure relates to rotational speed control for steered axles of a vehicle. The disclosure can be applied to heavy-duty vehicles, such as trucks, and buses, among other vehicle types. The disclosure can be applied in construction equipment and vehicles, such as excavators, loaders, articulated haulers. Although the disclosure may be described with respect to a particular vehicle, the disclosure is not restricted to any particular vehicle.

**BACKGROUND**

When controlling motion of vehicles with multiple steered axles, the steering and propulsion between axles must be coordinated to ensure safe and correct manoeuvring of the vehicle. Current approaches to multi-axle steering are often quite rudimentary, involving simple counter-steering of one axle relative to the other. For example, a rear steered axle may be provided with a steering angle that is proportional but opposite to that of a front steered axle. In other approaches, a rear steered axle may only be used for translational lateral movement, rather than used in a comprehensive steering strategy for diverse driving scenarios.

These approaches can lead to instability at high speeds or on lower friction surfaces. This is particularly relevant when operating construction vehicles such as excavators, loaders, articulated haulers, and the like in such scenarios. Operation of such vehicles may therefore be unsafe when employing approaches known in the art, for example when cornering at high speed (relative for construction equipment, around 30 km/h) and/or in low friction scenarios. The freedom of movement of the vehicle is therefore limited.

It is therefore desired to develop a solution for vehicle motion management that addresses or at least mitigates some of these issues.

**SUMMARY**

This disclosure provides systems, methods and other approaches for determining a rotational speed limit for a steered axle of a vehicle having two steered axles. In particular, a combined slip limit for the steered axle is determined based on a slip diamond. The slip diamond defines desired limits of longitudinal and lateral slip for the steered axle. A longitudinal slip limit for the steered axle is then determined based on the combined slip limit and a current lateral slip of the steered axle. Based on the longitudinal slip limit, a wheel radius, and a longitudinal velocity of the vehicle, a rotational speed limit for the steered axle is determined. The determined rotational speed limit can then be used in motion control of the vehicle, in particular for controlling torque of the steered axle. Setting a rotational speed limit in this way enables the vehicle to be controlled such that rotational speed on a front and/or rear steered axle of the vehicle is saturated (e.g. via torque) once the lateral slip is too high. This ensures that manoeuvres with lateral motion, such as cornering, can be performed more safely due to increased lateral traction. This is particularly advantageous at relatively high speeds (e.g. 30 km/h for construction equipment, but typically different based on vehicle types) and offers an improved control strategy for autonomously controlled vehicles, but also offers benefits relating to non- or semi-autonomously controlled vehicles.

According to a first aspect of the disclosure, there is provided a computer system for determining a rotational speed limit for a steered axle of a vehicle having two steered axles, the computer system comprising processing circuitry configured to acquire a combined slip limit for the steered axle based on a slip diamond defining desired limits of longitudinal and lateral slip for the steered axle, acquire a current lateral slip of the steered axle, determine a longitudinal slip limit for the steered axle based on the combined slip limit and the current lateral slip of the steered axle, and determine a rotational speed limit for the steered axle based on the determined longitudinal slip limit, a radius of a wheel of the steered axle, and a current longitudinal velocity of the vehicle.

The first aspect of the disclosure may seek to provide a rotational speed limit for a steered axle that adheres to a combined slip limit for the axle. This enables the vehicle to be controlled such that rotational speed on a front and/or rear steered axle of the vehicle is saturated (e.g. via torque) once the lateral slip is too high. As the lateral slip increases with increasing body slip on the vehicle, the longitudinal slip is further limited as body slip and/or path curvature increases, meaning that lateral forces required for a particular manoeuvre can be achieved. This ensures that manoeuvres with lateral motion, such as cornering, can be performed more safely due to increased lateral traction. This is particularly advantageous at high speeds and offers an improved control strategy for autonomously controlled vehicles, but also offers benefits relating to non- or semi-autonomously controlled vehicles.

Optionally in some examples, including in at least one preferred example, the steered axle is a front steered axle or a rear steered axle of the vehicle. A technical benefit may include that a vehicle having two steered axles may be controlled in an improved manner via either of its steered axles.

Optionally in some examples, including in at least one preferred example, the slip diamond is determined based on one or more of a surface friction, one or more tyre properties associated with the steered axle, and a vertical load on the steered axle. A technical benefit may include that a combined slip limit for the axle can be set at a more comfortable level (i.e. having an acceptable or preferable margin to maximum physical limits).

Optionally in some examples, including in at least one preferred example, the processing circuitry is configured to determine the longitudinal slip limit for the steered axle by subtracting the current lateral slip of the steered axle from the combined slip limit. A technical benefit may include that the longitudinal slip on a steered axle of the vehicle is limited further as the lateral slip increases.

Optionally in some examples, including in at least one preferred example, the processing circuitry is configured to determine the current lateral slip of the steered axle based on a current steering angle of the steered axle, a body slip of the vehicle, a distance from the centre of gravity of the vehicle to the steered axle, a current yaw rate of the vehicle, and a current longitudinal velocity of the vehicle. A technical benefit may include that an accurate and up-to-date value of the lateral slip is used to determine the longitudinal slip limit.

Optionally in some examples, including in at least one preferred example, the processing circuitry is configured to acquire the current lateral slip $\alpha_f$ of the front steered axle according to:

$$\alpha_f = -\delta_f + \beta + \frac{L_f \omega_z}{v_x}$$

where $\delta_f$ is the current steering angle of the front steered axle, $\beta$ is the current body slip of the vehicle, $L_f$ is the distance from the centre of gravity of the vehicle to the front steered axle, $\omega_z$ is the current yaw rate of the vehicle, and $v_x$ is the current longitudinal velocity of the vehicle. A technical benefit may include that an accurate and up-to-date value of the lateral slip is used to determine the longitudinal slip limit for the front steered axle.

Optionally in some examples, including in at least one preferred example, the processing circuitry is configured to acquire the current lateral slip $\alpha_r$ of the rear steered axle according to:

$$\alpha_r = -\delta_r + \beta + \frac{L_r \omega_z}{v_x}$$

where $\delta_r$ is the current steering angle of the rear steered axle, $\beta$ is the current body slip of the vehicle, $L_r$ is the distance from the centre of gravity of the vehicle to the rear steered axle, $\omega_z$ is the current yaw rate of the vehicle, and $v_x$ is the current longitudinal velocity of the vehicle. A technical benefit may include that an accurate and up-to-date value of the lateral slip is used to determine the longitudinal slip limit for the rear steered axle.

Optionally in some examples, including in at least one preferred example, the processing circuitry is configured to acquire the current body slip of the vehicle by determining a ratio between the lateral velocity of the vehicle and the longitudinal velocity of the vehicle. A technical benefit may include that an accurate and up-to-date value of the body slip of the vehicle is used to determine the longitudinal slip limit.

Optionally in some examples, including in at least one preferred example the processing circuitry is configured to determine the rotational speed limit $\omega_{w,max,f}$ for a front steered axle of the vehicle according to:

$$\left| \frac{R\omega_{w,max,f} - v_x}{v_x} \right| \le \left| slip_{max,f} - \alpha_f \right|$$

where R is the radius of a wheel of the front steered axle, $v_x$ is the longitudinal velocity of the vehicle, $slip_{max,f}$ is the combined slip limit of the front steered axle, and $\alpha_f$ is the current lateral slip of the front steered axle. A technical benefit may include that a rotational speed limit for the front steered axle that adheres to a combined slip limit for the axle is provided in an accurate and up-to-date manner.

Optionally in some examples, including in at least one preferred example, the processing circuitry is configured to determine the rotational speed limit for a rear steered axle of the vehicle according to:

$$\left| \frac{R\omega_{w,max,r} - v_x}{v_x} \right| \le \left| slip_{max,r} - \alpha_r \right|$$

where $R$ is the radius of a wheel of the rear steered axle, $v_x$ is the longitudinal velocity of the vehicle, $slip_{max,r}$ is the combined slip limit of the rear steered axle, and $\alpha_r$ is the current lateral slip of the rear steered axle. A technical benefit may include that a rotational speed limit for the rear steered axle that adheres to a combined slip limit for the axle is provided in an accurate and up-to-date manner.

Optionally in some examples, including in at least one preferred example, the processing circuitry is configured to transmit the determined longitudinal slip limit to a controller of the vehicle for use in controlling a torque of the at least one steered axle of the vehicle, such that an implemented rotational speed adheres to the determined rotational speed limit. A technical benefit may include that the vehicle may be controlled using existing control interfaces to ensure that rotational speed (e.g. via torque) on a front and/or rear steered axle of the vehicle is saturated once the lateral slip is too high. This ensures that manoeuvres with lateral motion, such as cornering, can be performed more safely due to increased lateral traction.

According to a second aspect of the disclosure, there is provided a vehicle comprising the computer system of the first aspect. The second aspect of the disclosure may seek to provide a vehicle capable of being controlled such that rotational speed (e.g. via torque) on a front and/or rear steered axle of the vehicle is saturated once the lateral slip is too high. This ensures that manoeuvres with lateral motion, such as cornering, can be performed more safely due to increased lateral traction.

According to a third aspect of the disclosure, there is provided a computer-implemented method for determining a rotational speed limit for a steered axle of a vehicle having two steered axles, the computer-implemented method comprising: acquiring, by processing circuitry of a computer system, a combined slip limit for the steered axle based on a slip diamond defining desired limits of longitudinal and lateral slip for the steered axle, acquiring, by the processing circuitry, a current lateral slip of the steered axle, determining, by the processing circuitry, a longitudinal slip limit for the steered axle based on the combined slip limit and the current lateral slip of the steered axle, and determining, by the processing circuitry, a rotational speed limit for the steered axle based on the determined longitudinal slip limit, a radius of a wheel of the steered axle, and a current longitudinal velocity of the vehicle.

The third aspect of the disclosure may seek to provide a rotational speed limit for a steered axle that adheres to a combined slip limit for the axle. This enables the vehicle to be controlled such that rotational speed on a front and/or rear steered axle of the vehicle is saturated (e.g. via torque) once the lateral slip is too high. As the lateral slip increases with increasing body slip on the vehicle, the longitudinal slip is further limited as body slip and/or path curvature increases, meaning that lateral forces required for a particular manoeuvre can be achieved. This ensures that manoeuvres with lateral motion, such as cornering, can be performed more safely due to increased lateral traction. This is particularly advantageous at high speeds and offers an improved control strategy for autonomously controlled vehicles, but also offers benefits relating to non- or semi-autonomously controlled vehicles.

According to a fourth aspect of the disclosure, there is provided a computer program product comprising program code for performing, when executed by processing circuitry, the computer-implemented method of the third aspect. The fourth aspect of the disclosure may seek to enable new vehicles and/or legacy vehicles to be conveniently configured, by software installation/update, to be controlled such that rotational speed on a front and/or rear steered axle of the vehicle is saturated (e.g. via torque) once the lateral slip is too high. This ensures that manoeuvres with lateral motion, such as cornering, can be performed more safely due to increased lateral traction.

According to a fifth aspect of the disclosure, there is provided a non- -transitory computer-readable storage medium comprising instructions, which when executed by processing circuitry, cause the processing circuitry to perform the computer-implemented method of the third aspect. The fifth aspect of the disclosure may seek to enable new vehicles and/or legacy vehicles to be conveniently configured, by software installation/update, to be controlled such that rotational speed on a front and/or rear steered axle of the vehicle is saturated (e.g. via torque) once the lateral slip is too high. This ensures that manoeuvres with lateral motion, such as cornering, can be performed more safely due to increased lateral traction.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

**FIG. 1** schematically shows a vehicle having two steered axles according to an example.
**FIG. 2** is a plot of a slip circle and slip diamond for a steered axle according to an example.

**FIG. 3** is a flow chart of a computer-implemented method according to an example.

**FIG. 4** is a schematic diagram of a computer system for implementing examples disclosed herein.

Like reference numerals refer to like elements throughout the description.

## DETAILED DESCRIPTION

The detailed description set forth below provides information and examples of the disclosed technology with sufficient detail to enable those skilled in the art to practice the disclosure.

When controlling motion of vehicles with multiple steered axles, the steering between axles must be coordinated to ensure safe and correct manoeuvring of the vehicle. Current approaches to multi-axle steering are often quite rudimentary and can lead to instability at high speeds or on lower friction surfaces. This is particularly relevant when operating construction vehicles such as excavators, loaders, articulated haulers, and the like in such scenarios. Operation of such vehicles may therefore be unsafe when employing approaches known in the art, for example when cornering at high speed (relative for construction equipment, around 30 km/h) and/or in low friction scenarios.

To remedy this, systems, methods and other approaches are provided herein for determining a rotational speed limit for a steered axle of a vehicle having two steered axles. In particular, a combined slip limit for the steered axle is determined based on a slip diamond. The slip diamond defines desired limits of longitudinal and lateral slip for the steered axle. A longitudinal slip limit for the steered axle is then determined based on the combined slip limit and a current lateral slip of the steered axle. Based on the longitudinal slip limit, a wheel radius, and a longitudinal velocity of the vehicle, a rotational speed limit for the steered axle is determined. The determined rotational speed limit can then be used in motion control of the vehicle, in particular for controlling torque of the steered axle. Setting a rotational speed limit in this way enables the vehicle to be controlled such that rotational speed on a front and/or rear steered axle of the vehicle is saturated (e.g. via torque) once the lateral slip is too high. This ensures that manoeuvres with lateral motion, such as cornering, can be performed more safely due to increased lateral traction. This is particularly advantageous at high speeds and offers an improved control strategy for autonomously controlled vehicles, but also offers benefits relating to non- or semi-autonomously controlled vehicles.

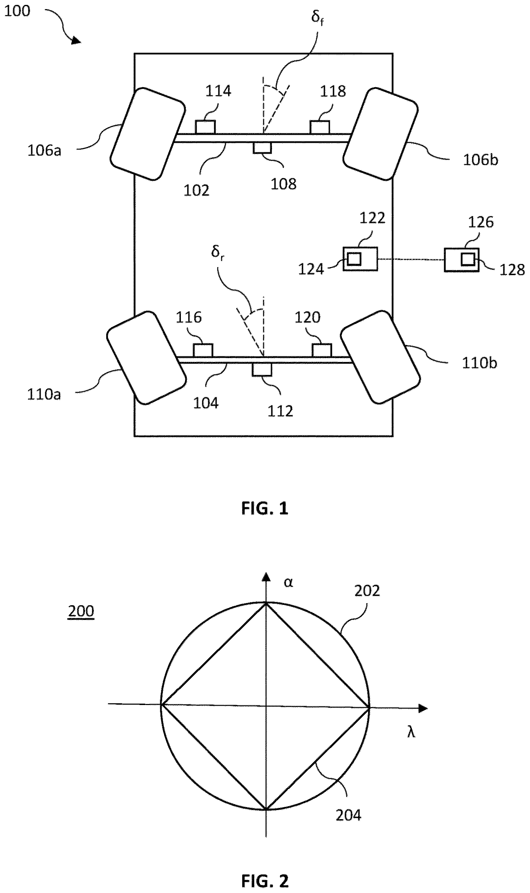

**FIG. 1** schematically shows a vehicle **100** having two steered axles **102, 104.** The front steered axle **102** has respective left and right wheels **106a, 106b.** A steering angle $\delta_f$ of the front steered axle **102** and its wheels **106a, 106b** is controlled by a front steering actuator **108.** The rear steered axle **104** has respective left and right wheels **110a, 110b.** A steering angle $\delta_r$ of the rear steered axle **104** and its wheels **110a, 110b** is controlled by a rear steering actuator **112.** The vehicle **100** may be any suitable vehicle known in the art having two steered axles (each axle including any suitable number of wheels), including heavy-duty vehicles, such as trucks, and buses, among other vehicle types. In some examples, the vehicle **100** may be a construction vehicle, for example any vehicle suitable for transporting bulk material from one location to another. For example, the vehicle **100** may be an excavator, loader, articulated hauler, dump truck, or any other suitable construction vehicle known in the art. Whilst two steered axles **102, 104** are shown, it will be appreciated that further non-steered axles may be provided on the vehicle **100** as appropriate.

The vehicle **100** may also comprise one or more propulsion systems **114, 116** configured to drive, e.g. provide torque and/or steering to, one or more axles **102, 104** or individual wheels **106, 110** of the vehicle **100.** The propulsion systems **114, 116** may include one or more electrical machines such as electric motors, which may be able to supply either a positive (propulsion) or negative (braking) force or torque. In the example of **FIG. 1,** each steered axle **102, 104** has a respective propulsion system **114, 116.** As such, the steered axles **102, 104** are both driven axles. It will also be appreciated that any number of the steered axles **102, 104** and/or further axles may be driven axles. For example, in some implementations, only one of the steered axles **102, 104** may be driven. In some examples, a third axle (not shown) may be a driven axle while the steered axles **102, 104** are not driven. In some examples, the individual wheels **106, 110** may have respective propulsion systems. In some examples, the vehicle **100** may also include another source of propulsion, for example an internal combustion engine (ICE). The vehicle **100** also comprises a drivetrain (not shown) to deliver mechanical power from the propulsion source (the electrical machines or the ICE) to the wheels **106, 110.**

The vehicle **100** may also comprise one or more brake systems **118, 120,** for example one or more sets of service brakes, configured to supply a negative (braking) force. The service brakes may be, for example, frictional brakes such as pneumatic brakes. The steering actuators **108, 112,** propulsion systems **114, 116,** and brake systems **118, 120** may be collectively referred to as motions support devices (MSDs) of the vehicle **100.**

In some examples, the vehicle **100** may be controlled (driven) by an on-board operator (driver). For example, the operator may provide an input to a steering wheel and/or accelerator/brake pedal of the vehicle **100** related to a manoeuvre, for example indicating a desired change of direction and/or speed of the vehicle **100.** In other examples, the vehicle **100** may be an autonomous vehicle that is controlled by a vehicle motion management (VMM) unit **122** comprising processing circuitry **124** configured to control motion of the vehicle **100** via the MSDs of the vehicle **100.** In some examples, the vehicle **100** may be capable of being controlled by an on-board or remote operator and/or the VMM unit **122,** in what may be termed a semi-autonomous driving scenario.

The VMM unit **122** may be configured to provide control signals to each of the MSDs of the vehicle **100.** To this end, the VMM unit **122** may be communicatively coupled to the steering actuators **108, 112,** propulsion systems **114, 116,** and/or brake systems **118, 120.** In some examples, the VMM unit **122** may be configured to provide a force, torque, and or longitudinal slip request to one or more of the propulsion systems **114, 116** and/or brake systems **118, 120,** and/or a steering angle request to one or more of the steering actuators **108, 112.** In a common driving scenario, a steering angle request may involve simple counter-steering of the steered axles **102, 104,** where a requested steering angle for the rear steered axle **104** is proportional (for example equal) but opposite to that of the front steered axle **102. FIG. 1** shows a single VMM unit **122** for all MSDs of the vehicle **100,** however it will be appreciated that each MSD may comprise a dedicated controller. The VMM unit **122** may be a microcontroller.

In some examples, the VMM unit **122** may determine the control signals itself, for example based on a predetermined mission plan or based on an input from an on-board operator. In some examples, the VMM unit **122** may receive control signals from a computer system **126** comprising processing circuitry **128.** The computer system **126** is communicatively coupled to the VMM unit **122.** The computer system **126** may be a vehicle control unit configured to perform various vehicle control functions, such as vehicle motion management. The computer system **126** may be local to the vehicle **100,** or may be a remote system, implemented at a distance from the vehicle **100,** e.g. a cloud server for remote control of the vehicle **100.**

A communicative coupling as referred to above may be implemented in any suitable way, for example via a circuit or any other wired, wireless, or network connection known in the art. Furthermore, a communicative coupling may be implemented as a direct connection, e.g. between the VMM unit **122** and the computer system **126,** or as a connection via one or more intermediate entities.

One function of the VMM unit **122** and the computer system **126** is to provide control inputs for the MSDs of the vehicle **100** to enable motion of the vehicle **100,** for example including straight-line driving, cornering, braking and the like. The implemented motion should be safe, stable, and enable sufficient freedom of movement of the vehicle **100.** To this end, a number of principles of motion for the vehicle **100** can be considered.

When the vehicle **100** is in motion, the wheels **106, 110** of the vehicle **100** experience slip. This can be considered in terms of body slip or slip angle. The body slip of the vehicle **100** is the angular difference between the direction the vehicle **100** is travelling and the direction that the body of the vehicle **100** is pointing, and is defined as the ratio between the lateral velocity $v_y$ and the longitudinal velocity $v_x$ of the vehicle **100.** Body slip can also be considered as the body slip on each of the steered axles **102, 104.** As the steered axles **102, 104** may have different lateral velocities, they may have different values of body slip. The slip angle refers to an individual wheel **106, 110** and is the difference between the direction the wheel **106, 110** is travelling and the direction it is pointing. Slip can be divided into longitudinal and lateral slip. These parameters are known in the art, and not discussed in detail here. However, some useful definitions are provided below.

The longitudinal slip Å and lateral slip $\alpha$ on a wheel **106, 110** may be given by:

$$\lambda = \frac{R\omega_w - v_x}{v_x} \qquad\qquad (1)$$

$$\alpha = arctan\left(\frac{v_{y,w}}{|v_{x,w}|}\right) \qquad\qquad (2)$$

where R is the wheel (or tyre) radius, $\omega_w$ is the wheel rotational speed, and $v_{x,w}$ and $v_{y,w}$ are the longitudinal and lateral velocity components of the wheel.

The rate of change of body slip $\dot{\beta}$ on the vehicle **100** as a whole can be given by a bicycle model defined as follows:

$$\dot{\beta} = -\frac{C_{f\alpha} + C_{r\alpha}}{m \cdot v_x}\beta + \left(\frac{-L_f \cdot C_{f\alpha} + L_r \cdot C_{r\alpha}}{m \cdot v_x{}^2} - 1\right)\omega_z + \frac{C_{f\alpha}}{mv_x}\delta_f + \frac{C_{r\alpha}}{mv_x}\delta_r \qquad (3)$$

where $C_{f\alpha}$ is the cornering stiffness of the front steered axle **102,** $C_{r\alpha}$ is the cornering stiffness of the rear steered axle **104,** $m$ is the mass of the vehicle **100,** $v_x$ is the longitudinal velocity of the vehicle **100,** $\beta$ is the body slip on the vehicle **100,** $L_f$ is the distance from the centre of gravity (CoG) of the vehicle **100** to the front steered axle **102,** $L_r$ is the distance from the CoG of the vehicle **100** to the rear steered axle **104,** and $\omega_z$ is the yaw rate of the vehicle **100.** The cornering stiffnesses $C_{f\alpha}, C_{r\alpha}$ may be determined from tyre properties of the vehicle **100.** The longitudinal velocity $v_x$ of the vehicle **100** may be determined in any suitable manner known in the art, for example using speed sensors of the vehicle **100.** The yaw rate $\omega_z$ of the vehicle **100** may be determined in any suitable manner known in the art, for example using one or more yaw sensors and/or inertial measurement units of the vehicle **100.**

Slip is inherently related to the interaction between the wheels **106, 110** of the vehicle **100** the surface being travelled on. This interaction can be characterised by a friction circle (also known as a circle of forces), where the achievable tyre forces (i.e. forces capable of being exerted by the wheel on the ground) are represented. In particular, a friction circle represents the longitudinal tyre force $F_x$ and the lateral tyre force $F_y$, and is given by:

$$r = \sqrt{F_x^2 + F_y^2} \qquad (4)$$

where $r$ is the radius of the circle and represents the total achieveable tyre force $F$ of a wheel **106, 110.** The magnitude of the total achiveable tyre force $F$ depends upon many factors, including tyre design, tyre condition, road surface, and vertical load.

The theory behind friction circles can be used for relationships other than force, such as slip. In this case, a slip circle can be plotted in a similar manner, with longitudinal slip Å on the x-axis and lateral slip $\alpha$ on the y-axis. This can be given by:

$$r = \sqrt{\lambda^2 + \alpha^2} \qquad (5)$$

Here, $r$ represents the combined slip on a wheel **106, 110.** Similarly to the total force, the magnitude of the combined slip depends upon many factors, including tyre design, tyre condition, road surface, and vertical load. A slip circle can be plotted for an individual wheel **106, 110** or for a particular axle **102, 104** (assuming left and right wheels on a single axle experience the same slip angle).

**FIG. 2** is a plot **200** of a slip circle with the longitudinal slip Å of (the wheels of) an axle **102, 104** on the x-axis against the lateral slip $\alpha$ on the y-axis for (the wheels of) the axle **102, 104.** The line **202** on the plot **200** is a slip circle as defined by equation (5). The combined slip is limited by the friction circle **202,** but can be any combination of the components $\lambda$ and $\alpha$ that does not extend beyond the circle **202.** For real tyres, the circle is more likely to be elliptical, with larger maximum longitudinal slip A than lateral slip $\alpha$. A similar plot could also be provided for individual wheels **106, 110.**

Using a friction or slip circle in motion control is nonlinear and hard to implement. Therefore, a friction or slip diamond may be used instead. The line **204** on the plot **200** is a slip diamond, given by:

$$r = \mathrm{abs}(\lambda) + \mathrm{abs}(\alpha) \qquad (6)$$

A slip diamond is a sum of absolute values, which is much easier to implement in a controller for a vehicle. Simplifying things in this way allows a combination of lateral and lateral slip limits through addition instead of a nonlinear relation. While a slip circle can be used to determine a maximum achievable slip, a slip diamond is determined that is within the bounds of the slip circle. It is therefore always ensured that the combined slip is within the maximum achievable limits. The slip diamond therefore defines desired limits of longitudinal and lateral slip for the steered axle. This can be used as a maximum combined slip $slip_{max}$ for an axle **102, 104** that is set at a more comfortable level (i.e. having an acceptable or preferable margin to the maximum physical limits).

It is known that the combined slip is made up of the longitudinal slip Å and lateral slip $\alpha$. Therefore, by subtracting the current lateral slip $\alpha$ from the maximum combined slip $slip_{max}$ (e.g. given by a slip circle or slip diamond as discussed above), the maximum longitudinal slip $\lambda_{max}$ for an axle **102, 104** can be determined. In particular, the maximum longitudinal slip $\lambda_{max}$ can be given by:

$$|\lambda_{max}| = |slip_{max} - \alpha| \qquad (7)$$

In this way, if the maximum combined slip $slip_{max}$ is determined using a slip diamond as discussed above, it can be ensured that the sum of longitudinal slip Å and lateral slip $\alpha$ is within the achievable range defined by the corresponding slip circle.

As longitudinal and lateral slips can be considered at an axle level, a maximum longitudinal slip $\lambda_{max}$ can be determined for each of the front and rear steered axles **102, 104** as follows:

$$|\lambda_{max,f}| \leq |slip_{max,f} - \alpha_f| \qquad (8)$$

$$\left|\lambda_{max,r}\right| \leq \left|slip_{max,r} - \alpha_r\right| \qquad (9)$$

where $\lambda_{max,f}$ is the maximum longitudinal slip for the (wheels of the) front steered axle **102**, $\lambda_{max,r}$ is the maximum longitudinal slip for the (wheels of the) rear steered axle **104**, $slip_{max,f}$ is the maximum combined slip for the (wheels of the) front steered axle **102**, $slip_{max,r}$ is the maximum combined slip for the (wheels of the) rear steered axle **104**, $\alpha_f$ is a current value of the lateral slip on the (wheels of the) front steered axle **102**, and $\alpha_r$ is a current value of the lateral slip on the (wheels of the) rear steered axle **104**. In some examples, the maximum combined slip can be the same for both axles **102, 104**.

The determined maximum longitudinal slips $\lambda_{max,f}$, $\lambda_{max,r}$ can then be used to determine a corresponding rotational speed limit for the (wheels of the) front and rear steered axles **102, 104** using the relation shown in equation (1) and in knowledge of the wheel (or tyre) radius and the current longitudinal velocity $v_x$ of the vehicle **100**. Indeed, combining equations (1), (8), and (9) gives the following relations:

$$\left|\frac{R\omega_{w,max,f} - v_x}{v_x}\right| \leq \left|slip_{max,f} - \alpha_f\right| \qquad (10)$$

$$\left|\frac{R\omega_{w,max,r} - v_x}{v_x}\right| \leq \left|slip_{max,r} - \alpha_r\right| \qquad (11)$$

Equations (10) and (11) can then be resolved to respectively provide a rotational speed limit $\omega_{w,max,f}$ for (the wheels of) the front steered axle **102,** and a rotational speed limit $\omega_{w,max,r}$ for (the wheels of) the rear steered axle **104.**

The current values of the lateral slip $\alpha_f$, $\alpha_r$ on each (wheel) of the front and rear steered axles **102, 104** can be determined in any suitable manner known in the art, for example using a linear tyre model based on vertical force and cornering stiffness. In some examples, the current values of the lateral slip $\alpha_f$, $\alpha_r$ can be expressed as follows:

$$\alpha_f = -\delta_f + \beta + \frac{L_f \omega_z}{v_x} \qquad (12)$$

$$\alpha_r = -\delta_r + \beta + \frac{L_r \omega_z}{v_x} \qquad (13)$$

where $\delta_f$, $\delta_f$, $\beta$, $\omega_z$, and $v_x$ are current values which can be determined in any suitable manner. If equations (12), and (13) are used to determine the current values of the lateral slip $\alpha_f$, $a_f$, equations (10), and (11) can be expressed as follows:

$$\left|\frac{R\omega_{w,max,f} - v_x}{v_x}\right| \leq slip_{max,f} - \left|-\delta_f + \beta + \frac{L_f \omega_z}{v_x}\right| \qquad (14)$$

$$\left|\frac{R\omega_{w,max,r} - v_x}{v_x}\right| \leq slip_{max,r} - \left|-\delta_r + \beta + \frac{L_r \omega_z}{v_x}\right| \qquad (15)$$

In this way, rotational speed limits for front and rear steered axles **102, 104** can be set that adhere to a combined slip limit for the respective axle **102, 104**. This can be done by setting a maximum longitudinal slip for a respective steered axle **102, 104** based on a current lateral slip, and determining a rotational speed limit accordingly. This can be implemented in a simple manner using existing control interfaces of the vehicle **100,** for example by controlling the torque of the respective axle **102, 104**. This will result in the rotational speed on the respective axles **102, 104** being saturated (e.g. via torque) once the lateral slip is too high.

In some embodiments, the steering angles $\delta_f$, $\delta_r$ can also be controlled to manage the stability of the vehicle **100**. In particular, the steering angles $\delta_f$, $\delta_r$ can be balanced with the combined slip limits $slip_{max,f}$, $slip_{max,r}$ to determine an appropriate maximum longitudinal slip according to equations (14) and (15). For example, in a low speed turn, counter-steering can move the yaw angle of the vehicle **100** towards the driving direction, reducing body slip of the vehicle **100**. In a high speed turn, parallel steering will reduce the lateral slip of (the wheels of) the axles as the yaw angle of the vehicle **100** faces more towards the driving direction. This can be implemented using a controller, for example a standard linear-quadratic-Gaussian (LQR) controller, with a bicycle model with yaw rate and body slip, as known in the art.

It is noted that the lateral slip $\alpha_f$, $\alpha_r$ on each of the respective front and rear steered axles **102, 104** is dependent on the body slip $\beta$ of the vehicle **100,** in particular increasing with increasing body slip $\beta$. As the maximum combined slip $slip_{max}$ is constant, this means that the maximum longitudinal slip $\lambda_{max}$ decreases as the body slip $\beta$ increases. Therefore, the disclosed solution ensures that longitudinal slip is further limited as body slip and/or path curvature increases, meaning that lateral forces required for a particular manoeuvre can be achieved. This ensures that manoeuvres with lateral motion, such as cornering, can be performed more safely due to increased lateral traction.

In an alternative approach, a current value of the longitudinal slip A could be subtracted from the maximum combined slip $slip_{max}$ to determine a maximum lateral slip $\alpha_{max}$. However, it is practically much more challenging to control lateral slip, and it is therefore preferable to control the longitudinal slip $\lambda$.

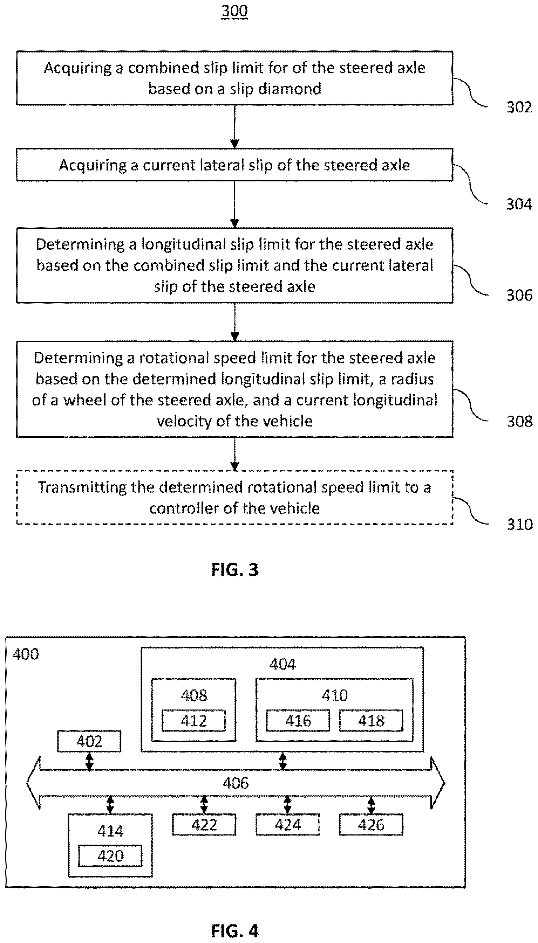

**FIG. 3** is a flow chart of a computer-implemented method **300** according to an example. The method **300** is for determining a rotational speed limit for a steered axle of a vehicle having two steered axles, such as the vehicle **100**. The method **300** enables longitudinal slip to be limited as body slip and/or path curvature increases, meaning that lateral forces required for a particular manoeuvre can be achieved. This ensures that manoeuvres with lateral motion, such as cornering, can be performed more safely due to increased lateral traction. The method **300** may be implemented by processing circuitry of a computer system (e.g., the processing circuitry **124** of the VMM unit **122,** or the processing circuitry **128** of the computer system **126** described in relation to **FIG. 1).**

Since the front steered axle **102** and the rear steered axle **104** will have different lateral velocities, they will have different amounts of body slip. Therefore, rotational speed limits for the steered axles **102, 104** can be set separately. The method **300** will be explained from hereon with examples relating to the front steered axle **102** of the vehicle **100,** but it will be appreciated that the method may equally be applied in relation to the rear steered axle **104** of the vehicle **100.**

At **302,** a combined slip limit for a steered axle **102, 104** is acquired based on a slip diamond for the axle. For example, a combined slip limit $slip_{max,f}$ for the front steered axle **102** is acquired based on a slip diamond for the front steered axle **102**. As discussed above, a slip diamond can be determined using equation (6). The magnitude of the slip diamond depends upon many factors, including tyre design, tyre condition, road surface, and vertical load on the vehicle **100,** as known in the art. While a slip circle can be used to determine a maximum achievable slip, a slip diamond is determined that is within the bounds of the slip circle. It is therefore always ensured that the combined slip is within the maximum achievable limits. The slip diamond defines desired limits of longitudinal and lateral slip for the steered axle. This can be considered as a maximum combined slip $slip_{max,f}$ for the front steered axle **102** which is set at a more comfortable level (i.e. having an acceptable or preferable margin to the maximum physical limits). Furthermore, use of a slip diamond allows a combination of lateral and lateral force limits through addition instead of a nonlinear relation.

At **304,** a current lateral slip of the steered axle **102, 104** is acquired. For example, a current lateral slip $\alpha_f$ of the front steered axle **102** is acquired. This may be achieved in any suitable way. For example, the current lateral slip $\alpha_f$ of the front steered axle **102** may be determined based on a current steering angle $\delta_f$ of the front steered axle **102,** a body slip $\beta$ of the vehicle **100,** a distance $L_f$ from the CoG of the vehicle **100** to the front steered axle **102,** a yaw rate $\omega_z$ of the vehicle **100,** and a longitudinal velocity $v_x$ of the vehicle **100,** as defined in equation (12). The steering angle $\delta_f$ may be determined in any suitable manner known in the art, for example based on a steering angle request sent to the front steered axle **102** or using sensors of the front steered axle **102**. The body slip $\beta$ of the vehicle **100** may be determined in any suitable manner known in the art, for example by determining the ratio between the lateral velocity $v_y$ and the longitudinal velocity $v_x$ using sensor or state estimation measurements, or by using inverse tyre models. The yaw rate $\omega_z$ and longitudinal velocity $v_x$ of the vehicle **100** may be determined in any suitable manner known in the art, as discussed above.

At **306,** a longitudinal slip limit for the steered axle **102, 104** is determined based on the combined slip limit acquired at **302** and the current lateral slip acquired at **304**. For example, a longitudinal slip limit $\lambda_{max,f}$ for the front steered axle **102** is determined based on the combined slip limit $slip_{max,f}$ acquired at **302** and the current lateral slip $\alpha_f$ of the front steered axle **102** acquired at **304**. In particular, the longitudinal slip limit $\lambda_{max,f}$ is determined by subtracting the current lateral slip $\alpha_f$ of the front steered axle **102** from the combined slip limit $slip_{max,f}$, as illustrated in equation (8).

At **308,** a rotational speed limit for the steered axle **102, 104** is determined based on the longitudinal slip limit determined at **306,** a radius $R$ of the wheels of the steered axle **102, 104,** and the current longitudinal velocity $v_x$ of the vehicle **100**. For example, a rotational speed limit $\omega_{w,max,f}$ for the front steered axle **102** is determined based on the longitudinal slip limit $\lambda_{max,f}$ determined at **306,** a radius $R$ of the wheels **106** of front steered axle **102,** and the current longitudinal velocity $v_x$ of the vehicle **100**. As discussed above, this can be achieved based on equation (10) or equation (14).

In this way, a rotational speed limit for a steered axle **102, 104** can be set that adheres to a combined slip limit for the axle **102, 104**. This can be done by setting a maximum longitudinal slip for the steered axle **102, 104** based on a current lateral slip, and determining the rotational speed limit accordingly. As the lateral slip increases with increasing body slip on the vehicle, the longitudinal slip is further limited as body slip and/or path curvature increases. This means that lateral forces required for a particular manoeuvre can be achieved, and ensures that manoeuvres with lateral motion, such as cornering, can be performed more safely due to increased lateral traction.

At **310,** the determined rotational speed limit may be transmitted to a controller of the vehicle **100** configured to control one or more motion parameters of the steered axle **102, 104.** For example, if the method **300** is performed at the computer system **126,** the determined longitudinal slip limit may be transmitted to the VMM unit **122.** The determined rotational speed limit may then be used in controlling a torque of the steered axle **102, 104** to ensure that the implemented (e.g. experienced and/or measured) rotational speed of the steered axle **102, 104** adheres to the determined limit. In some embodiments, the rotational speed may be additionally or alternatively controlled via a motor speed request, a brake pressure request, or the like. In the case that the individual wheels **106, 110** have respective propulsion systems, the wheels **106, 110** can operate with different forces or torques until the rotational speed limit per wheel. This may be beneficial for torque vectoring, since an outer wheel will have better traction in a curve, which allows higher torque before a rotational speed limit is reached. In some embodiments, the rotational speed limits are the same for both wheels on a single axle. This can be implemented in a simple manner using existing control interfaces of the vehicle 100. The determined rotational speed limit may be used in a control allocator when distributing torque to the actuators of the propulsion system **114** of the steered axle **102, 104.** This will result in the rotational speed on the steered axle **102, 104** being saturated (e.g. via torque) once the lateral slip is too high.

**FIG. 4** is a schematic diagram of a computer system **400** for implementing examples disclosed herein. The computer system **400** is adapted to execute instructions from a computer-readable medium to perform these and/or any of the functions or processing described herein. The computer system **400** may be connected (e.g., networked) to other machines in a LAN, an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include processing circuitry **402** (e.g., processing circuitry including one or more processor devices or control units), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine-executable instructions or data structures and which can be accessed by a computer or other machine with processing circuitry **402.** A basic input/output system (BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or non-transitory computer-usable or computer-readable storage medium (e.g., single medium or multiple media), such as the storage device **414,** which includes complex programming instructions (e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product (e.g., readable storage medium) storing the computer program **420** thereon, where at least a portion of a computer program **420** may be loadable (e.g., into a processor) for implementing the functionality of the examples described herein when executed by the processing circuitry **402.** The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit (e.g., a liquid crystal display (LCD) or a cathode ray tube (CRT)). The computer system **400** may include a communications interface **426** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

According to certain examples, there is also disclosed:

Example 1: A computer system (122, 126, 400) for determining a rotational speed limit for a steered axle (102, 104) of a vehicle (100) having two steered axles (102, 104), the computer system (122, 126, 400) comprising processing circuitry (124, 128, 402) configured to: acquire a combined slip limit for the steered axle (102, 104) based on a slip diamond defining desired limits of longitudinal and lateral slip for the steered axle (102, 104); acquire a current lateral slip of the steered axle (102, 104); determine a longitudinal slip limit for the steered axle (102, 104) based on the combined slip limit and the current lateral slip of the steered axle (102, 104); and determine a rotational speed limit for the steered axle (102, 104) based on the determined longitudinal slip limit, a radius of a wheel (106, 110) of the steered axle (102, 104), and a current longitudinal velocity of the vehicle (100).

Example 2: The computer system (122, 126, 400) of example 1, wherein the steered axle (102, 104) is a front steered axle (102) or a rear steered axle (104) of the vehicle (100).

Example 3: The computer system (122, 126, 400) of example 1 or 2, wherein the slip diamond is determined based on one or more of a surface friction, one or more tyre properties associated with the steered axle (102, 104), and a vertical load on the steered axle (102, 104).

Example 4: The computer system (122, 126, 400) of any preceding example, wherein the processing circuitry (124, 128, 402) is configured to determine the longitudinal slip limit for the steered axle (102, 104) by subtracting the current lateral slip of the steered axle (102, 104) from the combined slip limit.

Example 5: The computer system (122, 126, 400) of any preceding example, wherein the processing circuitry (124, 128, 402) is configured to determine the current lateral slip of the steered axle (102, 104) based on a current steering angle of the steered axle (102, 104), a body slip of the vehicle (100), a distance from the centre of gravity of the vehicle (100) to the steered axle (102, 104), a current yaw rate of the vehicle (100), and a current longitudinal velocity of the vehicle (100).

Example 6: The computer system (122, 126, 400) of example 5, wherein the processing circuitry (124, 128, 402) is configured to acquire the current lateral slip $\alpha_f$ of the front steered axle (102) according to:

$$\alpha_f = -\delta_f + \beta + \frac{L_f \omega_z}{v_x}$$

where $\delta_f$ is the current steering angle of the front steered axle (102), $\beta$ is the current body slip of the vehicle (100), $L_f$ is the distance from the centre of gravity of the vehicle (100) to the front steered axle (102), $\omega_z$ is the current yaw rate of the vehicle (100), and $v_x$ is the current longitudinal velocity of the vehicle (100).

Example 7: The computer system (122, 126, 400) of example 5 or 6, wherein the processing circuitry (124, 128, 402) is configured to acquire the current lateral slip $\alpha_r$ of the rear steered axle (104) according to:

$$\alpha_r = -\delta_r + \beta + \frac{L_r \omega_z}{v_x}$$

where $\delta_r$ is the current steering angle of the rear steered axle (104), $\beta$ is the current body slip of the vehicle (100), $L_r$ is the distance from the centre of gravity of the vehicle (100) to the rear steered axle (104), $\omega_z$ is the current yaw rate of the vehicle (100), and $v_x$ is the current longitudinal velocity of the vehicle (100).

Example 8: The computer system (122, 126, 400) of any of examples 5 to 7, wherein the processing circuitry (124, 128, 402) is configured to acquire the current body slip of the vehicle (100) by determining a ratio between the lateral velocity of the vehicle (100) and the longitudinal velocity of the vehicle (100).

Example 9: The computer system (122, 126, 400) of any of examples 4 to 8, wherein the processing circuitry (124, 128, 402) is configured to determine the rotational speed limit $\omega_{w,max,f}$ for a front steered axle (102) of the vehicle according to:

$$\left| \frac{R\omega_{w,max,f} - v_x}{v_x} \right| \leq \left| slip_{max,f} - \alpha_f \right|$$

where $R$ is the radius of a wheel (106) of the front steered axle (102), $v_x$ is the longitudinal velocity of the vehicle (100), $slip_{max,f}$ is the combined slip limit of the front steered axle (102), and $\alpha_f$ is the current lateral slip of the front steered axle (102).

Example 10: The computer system (122, 126, 400) of any of examples 4 to 9, wherein the processing circuitry (124, 128, 402) is configured to determine the rotational speed limit for a rear steered axle (104) of the vehicle according to:

$$\left| \frac{R\omega_{w,max,r} - v_x}{v_x} \right| \leq \left| slip_{max,r} - \alpha_r \right|$$

where $R$ is the radius of a wheel (110) of the rear steered axle (104), $v_x$ is the longitudinal velocity of the vehicle (100), $slip_{max,r}$ is the combined slip limit of the rear steered axle (104), and $\alpha_r$ is the current lateral slip of the rear steered axle (104).

Example 11: The computer system (122, 126, 400) of any preceding example, wherein the processing circuitry (124, 128, 402) is configured to transmit the determined longitudinal slip limit to a controller (122, 126) of the vehicle (100) for use in controlling a torque of the at least one steered axle (102, 104) of the vehicle (100), such that an implemented rotational speed adheres to the determined rotational speed limit.

Example 12: A vehicle (100) comprising the computer system (122, 126, 400) of any preceding example.

Example 13: A computer-implemented method (300) for determining a rotational speed limit for a steered axle (102, 104) of a vehicle (100) having two steered axles (102, 104), the computer-implemented method (300) comprising: acquiring (302), by processing circuitry (124, 128, 402) of a computer system (122, 126, 400), a combined slip limit for the steered axle (102, 104) based on a slip diamond defining desired limits of longitudinal and lateral slip for the steered axle (102, 104); acquiring (304), by the processing circuitry (124, 128, 402), a current lateral slip of the steered axle (102, 104); determining (306), by the processing circuitry (124, 128, 402), a longitudinal slip limit for the steered axle (102, 104) based on the combined slip limit and the current lateral slip of the steered axle (102, 104); and determining (308), by the processing circuitry (124, 128, 402), a rotational speed limit for the steered axle (102, 104) based on the determined longitudinal slip limit, a radius of a wheel (106, 110) of the steered axle (102, 104), and a current longitudinal velocity of the vehicle (100).

Example 14: The computer-implemented method (300) of example 13, wherein the steered axle (102, 104) is a front steered axle (102) or a rear steered axle (104) of the vehicle (100).

Example 15: The computer-implemented method (300) of example 13 or 14, wherein the slip diamond is determined based on one or more of a surface friction, one or more tyre properties associated with the steered axle (102, 104), and a vertical load on the steered axle (102, 104).

Example 16: The computer-implemented method (300) of any of examples 13 to 15, comprising determining (306), by the processing circuitry (124, 128, 402), the longitudinal slip limit for the steered axle (102, 104) by subtracting the current lateral slip of the steered axle (102, 104) from the combined slip limit.

Example 17: The computer-implemented method (300) of any of examples 13 to 16, comprising acquiring (304), by the processing circuitry (124, 128, 402), the current lateral slip of the steered axle (102, 104) based on a current steering angle of the steered axle (102, 104), a body slip of the vehicle (100), a distance from the centre of gravity of the vehicle (100) to the steered axle (102, 104), a current yaw rate of the vehicle (100), and a current longitudinal velocity of the vehicle (100).

Example 18: The computer-implemented method (300) of example 17, comprising acquiring (304), by the processing circuitry (124, 128, 402), the current lateral slip $\alpha_f$ of the front steered axle (102) according to:

$$\alpha_f = -\delta_f + \beta + \frac{L_f \omega_z}{v_x}$$

where $\delta_f$ is the current steering angle of the front steered axle (102), $\beta$ is the current body slip of the vehicle (100), $L_f$ is the distance from the centre of gravity of the vehicle (100) to the front steered axle (102), $\omega_z$ is the current yaw rate of the vehicle (100), and $v_x$ is the current longitudinal velocity of the vehicle (100).

Example 19: The computer-implemented method (300) of example 17 or 18, comprising acquiring (304), by the processing circuitry (124, 128, 402), the current lateral slip $\alpha_r$ of the rear steered axle (104) according to:

$$\alpha_r = -\delta_r + \beta + \frac{L_r \omega_z}{v_x}$$

where $\delta_r$ is the current steering angle of the rear steered axle (104), $\beta$ is the current body slip of the vehicle (100), $L_r$ is the distance from the centre of gravity of the vehicle (100) to the rear steered axle (104), $\omega_z$ is the current yaw rate of the vehicle (100), and $v_x$ is the current longitudinal velocity of the vehicle (100).

Example 20: The computer-implemented method (300) of any of examples 17 to 19, comprising acquiring, by the processing circuitry (124, 128, 402), the current body slip of the vehicle (100) by determining a ratio between the lateral velocity of the vehicle (100) and the longitudinal velocity of the vehicle (100).

Example 21: The computer-implemented method (300) of any of examples 16 to 20, comprising determining (308), by the processing circuitry (124, 128, 402), the rotational speed limit $\omega_{w,max,f}$ for a front steered axle (102) of the vehicle according to:

$$\left| \frac{R\omega_{w,max,f} - v_x}{v_x} \right| \leq \left| slip_{max,f} - \alpha_f \right|$$

where R is the radius of a wheel (106) of the front steered axle (102), $v_x$ is the longitudinal velocity of the vehicle (100), $slip_{max,f}$ is the combined slip limit of the front steered axle (102), and $\alpha_f$ is the current lateral slip of the front steered axle (102).

Example 22: The computer-implemented method (300) of any of examples 16 to 21, comprising determining (308), by the processing circuitry (124, 128, 402), the rotational speed limit for a rear steered axle (104) of the vehicle according to:

$$\left| \frac{R\omega_{w,max,r} - v_x}{v_x} \right| \leq \left| slip_{max,r} - \alpha_r \right|$$

where R is the radius of a wheel (110) of the rear steered axle (104), $v_x$ is the longitudinal velocity of the vehicle (100), $slip_{max,r}$ is the combined slip limit of the rear steered axle (104), and $\alpha_r$ is the current lateral slip of the rear steered axle (104).

Example 23: The computer-implemented method (300) of any of examples 13 to 22, comprising transmitting (310), by the processing circuitry (124, 128, 402), the determined longitudinal slip limit to a controller (122, 126) of the vehicle (100) for use in controlling a torque of the at least one steered axle (102, 104) of the vehicle (100), such that an implemented rotational speed adheres to the determined rotational speed limit.

Example 24: A computer program product comprising program code for performing, when executed by processing circuitry (124, 128, 402), the computer-implemented method (300) of any of examples 13 to 23.

Example 25: A non-transitory computer-readable storage medium comprising instructions, which when executed by processing circuitry (124, 128, 402), cause the processing circuitry (124, 128, 402) to perform the computer-implemented method (300) of any of examples 13 to 23.

Terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (122, 126, 400) for determining a rotational speed limit for a steered axle (102, 104) of a vehicle (100) having two steered axles (102, 104), the computer system (122, 126, 400) comprising processing circuitry (124, 128, 402) configured to:

   acquire a combined slip limit for the steered axle (102, 104) based on a slip diamond defining desired limits of longitudinal and lateral slip for the steered axle (102, 104);
   acquire a current lateral slip of the steered axle (102, 104);
   determine a longitudinal slip limit for the steered axle (102, 104) based on the combined slip limit and the current lateral slip of the steered axle (102, 104); and
   determine a rotational speed limit for the steered axle (102, 104) based on the determined longitudinal slip limit, a radius of a wheel (106, 110) of the steered axle (102, 104), and a current longitudinal velocity of the vehicle (100).

2. The computer system (122, 126, 400) of claim 1, wherein the steered axle (102, 104) is a front steered axle (102) or a rear steered axle (104) of the vehicle (100).

3. The computer system (122, 126, 400) of claim 1 or 2, wherein the slip diamond is determined based on one or more of a surface friction, one or more tyre properties associated with the steered axle (102, 104), and a vertical load on the steered axle (102, 104).

4. The computer system (122, 126, 400) of any preceding claim, wherein the processing circuitry (124, 128, 402) is configured to determine the longitudinal slip limit for the steered axle (102, 104) by subtracting the current lateral slip of the steered axle (102, 104) from the combined slip limit.

5. The computer system (122, 126, 400) of any preceding claim, wherein the processing circuitry (124, 128, 402) is configured to determine the current lateral slip of the steered axle (102, 104) based on a current steering angle of the steered axle (102, 104), a body slip of the vehicle (100), a distance from the centre of gravity of the vehicle (100) to the steered axle (102, 104), a current yaw rate of the vehicle (100), and a current longitudinal velocity of the vehicle (100).

6. The computer system (122, 126, 400) of claim 5, wherein the processing circuitry (124, 128, 402) is configured to acquire the current lateral slip $\alpha_f$ of a front steered axle (102) according to:

$$\alpha_f = -\delta_f + \beta + \frac{L_f \omega_z}{v_x}$$

where $\delta_f$ is the current steering angle of the front steered axle (102), $\beta$ is the current body slip of the vehicle (100), $L_f$ is the distance from the centre of gravity of the vehicle (100) to the front steered axle (102), $\omega_z$ is the current yaw rate of the vehicle (100), and $v_x$ is the current longitudinal velocity of the vehicle (100).

7. The computer system (122, 126, 400) of claim 5 or 6, wherein the processing circuitry (124, 128, 402) is configured to acquire the current lateral slip $\alpha_r$ of a rear steered axle (104) according to:

$$\alpha_r = -\delta_r + \beta + \frac{L_r \omega_z}{v_x}$$

where $\delta_r$ is the current steering angle of the rear steered axle (104), $\beta$ is the current body slip of the vehicle (100), $L_r$ is the distance from the centre of gravity of the vehicle (100) to the rear steered axle (104), $\omega_z$ is the current yaw rate of the vehicle (100), and $v_x$ is the current longitudinal velocity of the vehicle (100).

8. The computer system (122, 126, 400) of any of claims 5 to 7, wherein the processing circuitry (124, 128, 402) is configured to acquire the current body slip of the vehicle (100) by determining a ratio between the lateral velocity of the vehicle (100) and the longitudinal velocity of the vehicle (100).

9. The computer system (122, 126, 400) of any of claims 4 to 8, wherein the processing circuitry (124, 128, 402) is configured to determine the rotational speed limit $\omega_{w,max,f}$ for a front steered axle (102) of the vehicle according to:

$$\left| \frac{R\omega_{w,max,f} - v_x}{v_x} \right| \leq \left| slip_{max,f} - \alpha_f \right|$$

where R is the radius of a wheel (106) of the front steered axle (102), $v_x$ is the longitudinal velocity of the vehicle (100), $slip_{max,f}$ is the combined slip limit of the front steered axle (102), and $\alpha_f$ is the current lateral slip of the front steered axle (102).

10. The computer system (122, 126, 400) of any of claims 4 to 9, wherein the processing circuitry (124, 128, 402) is configured to determine the rotational speed limit for a rear steered axle (104) of the vehicle according to:

$$\left| \frac{R\omega_{w,max,r} - v_x}{v_x} \right| \leq \left| slip_{max,r} - \alpha_r \right|$$

where R is the radius of a wheel (110) of the rear steered axle (104), $v_x$ is the longitudinal velocity of the vehicle (100), $slip_{max,r}$ is the combined slip limit of the rear steered axle (104), and $\alpha_r$ is the current lateral slip of the rear steered axle (104).

11. The computer system (122, 126, 400) of any preceding claim, wherein the processing circuitry (124, 128, 402) is configured to transmit the determined longitudinal slip limit to a controller (122, 126) of the vehicle (100) for use in controlling a torque of the at least one steered axle (102, 104) of the vehicle (100), such that an implemented rotational speed adheres to the determined rotational speed limit.

**12.** A vehicle (100) comprising the computer system (122, 126, 400) of any preceding claim.

**13.** A computer-implemented method (300) for determining a rotational speed limit for a steered axle (102, 104) of a vehicle (100) having two steered axles (102, 104), the computer-implemented method (300) comprising:

acquiring (302), by processing circuitry (124, 128, 402) of a computer system (122, 126, 400), a combined slip limit for the steered axle (102, 104) based on a slip diamond defining desired limits of longitudinal and lateral slip for the steered axle (102, 104);

acquiring (304), by the processing circuitry (124, 128, 402), a current lateral slip of the steered axle (102, 104);

determining (306), by the processing circuitry (124, 128, 402), a longitudinal slip limit for the steered axle (102, 104) based on the combined slip limit and the current lateral slip of the steered axle (102, 104); and

determining (308), by the processing circuitry (124, 128, 402), a rotational speed limit for the steered axle (102, 104) based on the determined longitudinal slip limit, a radius of a wheel (106, 110) of the steered axle (102, 104), and a current longitudinal velocity of the vehicle (100).

**14.** A computer program product comprising program code for performing, when executed by processing circuitry (124, 128, 402), the computer-implemented method (300) of claim 13.

**15.** A non-transitory computer-readable storage medium comprising instructions, which when executed by processing circuitry (124, 128, 402), cause the processing circuitry (124, 128, 402) to perform the computer-implemented method (300) of claim 13.

**FIG. 1**

**FIG. 2**

<u>300</u>

```
┌─────────────────────────────────────────────────┐
│ Acquiring a combined slip limit for of the steered axle │ ⟍
│            based on a slip diamond               │    302
└─────────────────────────────────────────────────┘
                        │
                        ▼
┌─────────────────────────────────────────────────┐
│  Acquiring a current lateral slip of the steered axle  │ ⟍
│                                                 │    304
└─────────────────────────────────────────────────┘
                        │
                        ▼
┌─────────────────────────────────────────────────┐
│ Determining a longitudinal slip limit for the steered axle │
│ based on the combined slip limit and the current lateral │ ⟍
│             slip of the steered axle             │    306
└─────────────────────────────────────────────────┘
                        │
                        ▼
┌─────────────────────────────────────────────────┐
│ Determining a rotational speed limit for the steered axle │
│ based on the determined longitudinal slip limit, a radius │
│ of a wheel of the steered axle, and a current longitudinal │ ⟍
│             velocity of the vehicle              │    308
└─────────────────────────────────────────────────┘
                        │
                        ▼
┌─ ─ ─ ─ ─ ─ ─ ─ ─ ─ ─ ─ ─ ─ ─ ─ ─ ─ ─ ─ ─ ─ ─ ─ ┐
│ Transmitting the determined rotational speed limit to a │ ⟍
│            controller of the vehicle             │    310
└─ ─ ─ ─ ─ ─ ─ ─ ─ ─ ─ ─ ─ ─ ─ ─ ─ ─ ─ ─ ─ ─ ─ ─ ┘
```

**FIG. 3**

**FIG. 4**

**EUROPEAN SEARCH REPORT**

Europäisches
Patentamt
European
Patent Office
Office européen
des brevets

Application Number

EP 24 19 4784

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EFREMOV DENIS ET AL: "Vehicle and Wheels Stability Defined Using Driving Envelope Protection Algorithm", IEEE TRANSACTIONS ON INTELLIGENT TRANSPORTATION SYSTEMS, IEEE, PISCATAWAY, NJ, USA, vol. 25, no. 9, 19 February 2024 (2024-02-19), pages 11304-11316, XP011981203, ISSN: 1524-9050, DOI: 10.1109/TITS.2024.3362064 [retrieved on 2024-02-19] * the whole document * | 1-15 | INV. B60W30/045 B60W30/18 B60W40/103 B62D7/15 |
| A | US 2024/182019 A1 (GAO YANGYAN [US] ET AL) 6 June 2024 (2024-06-06) * paragraphs [0043], [0048], [0068], [0072]; claim 1; figures 7-8 * | 1-15 | |
| A | US 2005/234621 A1 (LIN WILLIAM C [US] ET AL) 20 October 2005 (2005-10-20) * paragraphs [0039], [0048]; claim 1; figures 1,8 * | 1-15 | TECHNICAL FIELDS SEARCHED (IPC) B60W B62D |

The present search report has been drawn up for all claims

| Place of search | Date of completion of the search | Examiner |
|---|---|---|
| Munich | 21 January 2025 | Rameau, Pascal |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P4C01)

## ANNEX TO THE EUROPEAN SEARCH REPORT
## ON EUROPEAN PATENT APPLICATION NO.

EP 24 19 4784

This annex lists the patent family members relating to the patent documents cited in the above-mentioned European search report.
The members are as contained in the European Patent Office EDP file on
The European Patent Office is in no way liable for these particulars which are merely given for the purpose of information.

21-01-2025

| Patent document cited in search report | Publication date | Patent family member(s) | Publication date |
|---|---|---|---|
| US 2024182019 A1 | 06-06-2024 | EP 4330097 A1 | 06-03-2024 |
| | | US 2024182019 A1 | 06-06-2024 |
| | | WO 2022228653 A1 | 03-11-2022 |
| US 2005234621 A1 | 20-10-2005 | DE 102005018069 A1 | 24-11-2005 |
| | | US 2005234621 A1 | 20-10-2005 |

EPO FORM P0459

For more details about this annex : see Official Journal of the European Patent Office, No. 12/82